# EUROPEAN PATENT SPECIFICATION

(11) **EP 2 980 961 B1**
(45) Date of publication and mention of the grant of the patent: **26.12.2018**
(21) Application number: 14773779.5
(22) Date of filing: 20.03.2014
(51) Int. Cl.: H02K 1/14, H02K 21/22, H02K 29/03

(54) **MAGNET GENERATOR**
MAGNETGENERATOR
GÉNÉRATEUR À AIMANTS

(30) Priority: 26.03.2013 JP 2013063831
(43) Date of publication of application: 03.02.2016
(73) Proprietor: Mitsuba Corporation, Kiryu-shi, Gunma 376-8555 (JP)
(72) Inventor: WATANABE, Hitoshi, Kiryu-shi Gunma 376-8555 (JP); KAWAGISHI, Masakazu, Kiryu-shi Gunma 376-8555 (JP)
(74) Representative: Cabinet Laurent & Charras
(86) International application number: PCT/JP2014/057805
(87) International publication number: WO 2014/156971

(56) References cited:
- EP-A2- 0 901 214
- WO-A1-03/098781
- JP-A- 2003 189 573
- JP-A- 2004 215 479
- JP-A- 2004 304 928
- JP-A- 2007 068 281
- JP-A- 2010 017 057
- JP-A- 2010 017 057
- JP-A- 2010 057 208
- JP-A- 2011 182 612
- US-A- 5 469 005
- US-A- 5 918 360
- US-A1- 2004 245 881
- US-A1- 2005 012 413
- AHMAD M S ET AL: "Permanent magnet brushless machines with minimum difference in slot number and pole number", POWER AND ENERGY CONFERENCE, 2008. PECON 2008. IEEE 2ND INTERNATIONAL, IEEE, PISCATAWAY, NJ, USA, 1 December 2008 (2008-12-01), pages 1064-1069, XP031413068, ISBN: 978-1-4244-2404-7

## Description

### [Technical Field]

The present invention relates to a magnet generator using a permanent magnet, and particularly to a three-phase magnet generator connected to an engine of a motorcycle, or the like.

### [Background Art]

A magnet generator capable of obtaining high power in a simple structure is frequently used as a generator mounted in a motorcycle. The magnet generator is configured of a stator around which coils are wound and a rotor equipped with permanent magnets. The magnet generator causes the rotor to be rotated and driven by, for instance, an engine. Thereby, a rotating magnetic field formed by the permanent magnets cuts across the coils, and electromotive force is generated at the stator side.

On the one hand, in recent motorcycles, with the advancement to high-class equipment (mounting of an electronic toll collection system (ETC), an automotive navigation system, etc.) or the addition of devices (mounting of a micro-computer for engine control, etc.) for reducing an environmental load, an intra-motorcycle electrical load continues to increase. For this reason, a further increase in power and efficiency is required from the generator for the motorcycle.

In the generator for the motorcycle, improvements in magnetic circuits and components are made day by day to meet such a requirement.

For example, in Patent Literature 1, a generator employing a more high-powered magnetic circuit with higher efficiency is disclosed. In the magnet generator of Patent Literature 1, the following problems may occur, which should be solved.

In the magnet generator of Patent Literature 1, since the number of salient poles for the number 2p of magnetic poles is 2p-2, the number of salient poles is reduced. For this reason, in the magnet generator of Patent Literature 1, a power generation amount is reduced in certain cases.

In the magnet generator of Patent Literature 1, if the number of magnetic poles is increased to secure the power generation amount (e.g. 20 poles), a field-effect transistor (FET) type voltage regulator capable of coping with high frequencies is needed. The FET type voltage regulator is more expensive than a voltage regulator using a thyristor, and the system cost is increased, which increases product prices.

In the magnet generator of Patent Literature 1, since phases may differ from one another in the number of salient poles, power generation efficiency may be reduced due to an imbalance in the number of salient poles. Especially, in a magnetic pole configuration (e.g. N = 12, 16) in which an inexpensive voltage regulator can be used, power generation balance between the phases easily collapses due to the imbalance in the number of salient poles, and the power generation efficiency may be deteriorated.

Thus, a generator in which many salient poles are disposed is proposed. A generator is disclosed in Patent Literature 2, in which an arrangement angle between neighboring in-phase salient poles matches a pole arc angle of a permanent magnet, whereas an arrangement angle between neighboring out-of-phase salient poles is set to be smaller than the pole arc angle of the permanent magnet.

In the magnet generator of Patent Literature 2, a power generation amount can be improved while maintaining the same constitution. In the magnet generator of Patent Literature 2, the number of magnetic poles can also be kept below 16 while securing the amount of power generated. For this reason, an inexpensive thyristor type voltage regulator is used, and thereby an increase in system cost can be suppressed. In the magnet generator of Patent Literature 2, the salient poles of each phase can be uniformly arranged in the magnet generator. Thereby, a drop in the power generation efficiency due to the collapse of the power generation balance between the phases can be prevented. Document US 2004/245881A1 discloses a permanent magnet-embedded concentrated winding motor with a plurality of stator teeth divided into several groups. However, the resulting generator lacks of efficiency regarding the manufacturing process and the power generation. Document JP 2010 017057 also discloses a structure of magnet-generator having the same drawbacks.

### [Citation List]

### [Patent Literature]

[Patent Literature 1] PCT International Publication No. WO2003/098781
[Patent Literature 2] Japanese Unexamined Patent Application, First Publication No. 2011-120429

### [Summary of Invention]

### [Technical Problem]

Although the magnet generator of Patent Literature 2 can improve the amount of power generation, manufacturing efficiency may decrease.

In the magnet generator of Patent Literature 2, an interval between the neighboring out-of-phase salient poles is set to be narrower than an interval between the neighboring in-phase salient poles. Since the intervals between the neighboring salient poles are not equal to one another, when the coils are wound around the salient poles, measures to, for instance, change a winding speed for each salient pole are needed. For this reason, the manufacturing efficiency may be reduced.

The present invention is to provide a magnet generator as defined by the appended claims, capable of preventing a drop in manufacturing efficiency while achieving an increase in power and efficiency of power generation.

### [Solution to Problem]

According to the present invention, a magnet generator includes: a stator having a plurality of salient poles, each of which is configured of a magnetic path portion around which a coil is wound and a protrusion protruding laterally from a tip of the magnetic path portion; and a rotor arranged rotatably on an inner or outer circumference of the stator and having a plurality of permanent magnets attached in a circumferential direction to be opposite to the salient poles. The salient poles are configured such that every magnetic path portions has the same arrangement angle between the adjacent magnetic path portions. The salient poles has distal ends having surface that are arranged to be opposite to the permanent magnets, each surface of the distal ends includes an area of the magnetic path portion and an area of the protrusion. An arrangement angle between center positions of the surfaces of the distal ends in the circumferential direction that are in phase, is set to be same as a pole arc angle of each of the permanent magnets.

According to the present invention, the salient poles adjacent only to the salient poles that are in phase have the protrusions disposed at both sides in the circumferential direction, and the salient poles adjacent to the salient poles that are out of phase have the protrusions disposed only at a side adjacent to each of the out-of-phase salient poles in either circumferential direction.

According to a third aspect of the present invention, in the second aspect, protrusion amounts of the protrusions are set to be approximately uniform.

According to a fourth aspect of the present invention, in the first aspect, the salient poles have the protrusions disposed at both sides in the circumferential direction, and the salient poles adjacent to the salient poles that are out of phase are configured such that a protrusion amount of each of the protrusions disposed at a first side in the circumferential direction is different from that of each of the protrusions disposed at a second side in the circumferential direction.

According to a fifth aspect of the present invention, in the second or third aspect, the magnet generator includes bobbins disposed to correspond to the salient poles adjacent to the out-of-phase salient poles. Each of the bobbins has an irregular coil winding prevention part, which prevents irregular winding of the coil, at a side opposite to each of the in-phase salient poles.

According to a sixth aspect of the present invention, in any one of the first to fifth aspects, in-phase salient poles disposed adjacent to each other in the circumferential direction are disposed at the same electrical angle.

### [Advantageous Effects of Invention]

According to the aforementioned magnet generator, since the arrangement angle for the protrusions of the salient poles approximates the pole arc angle for the permanent magnets, the efficiency of the power generation can be inhibited from being reduced by the collapse of power generation balance between the phases. Accordingly, an increase in power and efficiency of the generator can be realized.

On the other hand, since each of the magnetic path portions has the same angle between the neighboring magnetic path portions of the salient poles, it is possible to efficiently wind the coils around the magnetic path portions and to prevent a drop in manufacturing efficiency.

### [Brief Description of Drawings]

Fig. 1 is a sectional view showing a configuration of a generator 1 according to a first embodiment of the present invention.
Fig. 2 is a view showing shapes and an arrangement of salient poles 14 in the generator 1.
Fig. 3 is a view showing distal ends 17.
Fig. 4 is a view showing a configuration of a generator 51 according to a second embodiment of the present invention.
Fig. 5 is a view showing a configuration of a generator 61 according to a third embodiment of the present invention.
Fig. 6 is a view showing a bobbin 40.
Fig. 7 is a view showing a conventional generator 91.

### [Description of Embodiments]

Hereinafter, an embodiment of the present invention will be described in detail based on the drawings.

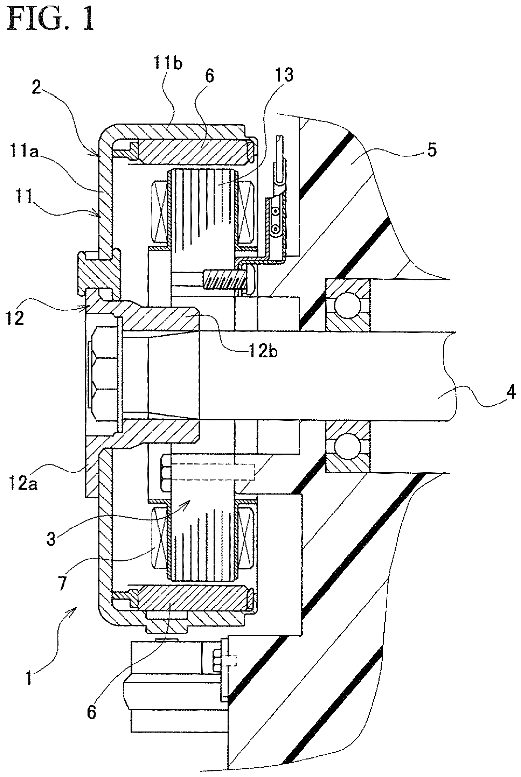

Fig. 1 is a sectional view showing a configuration of a generator 1 according to a first embodiment of the present invention.

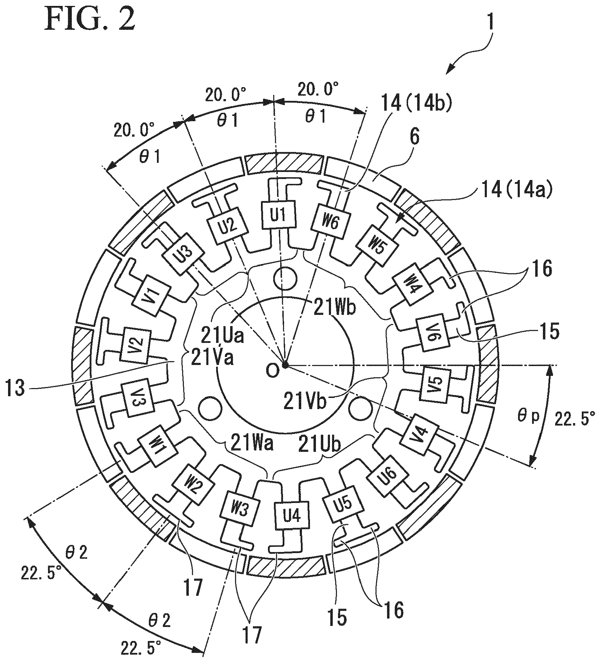

Fig. 2 is a view showing shapes and an arrangement of salient poles 14 in the generator 1.

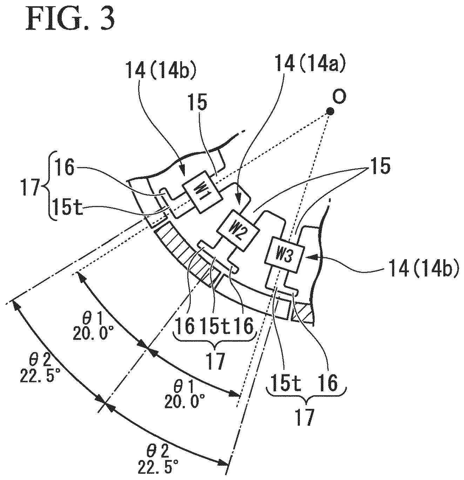

Fig. 3 is a view (or a partial enlarged view of Fig. 2) showing distal ends 17.

The generator 1 is a so-called outer rotor type magnet generator. The generator 1 is, for instance, used as an alternating current generator (ACG) of a motorcycle. Roughly speaking, the generator 1 is configured of a rotor 2 and a stator 3.

In the following description, M indicates the number of salient poles of the stator 3. N indicates the number of magnetic poles of permanent magnets 6 (of the rotor 2). θp indicates a pole arc angle of each permanent magnet 6. θ1 indicates an arrangement angle for magnetic path portions 15 of salient poles 14. θ2 indicates an arrangement angle for distal ends 17 of the salient poles 14 that are in phase. X indicates the number of phases (X = 3 in the case of three phases). All of θp, θ1, and θ2 are mechanical angles.

The rotor 2 is mounted on a crankshaft 4 of an engine, and functions as a field element.

The stator 3 is mounted in a housing 5 of the engine, and functions as an armature.

The permanent magnets 6 are mounted on the rotor 2. Coils 7 are mounted on the stator 3.

When the rotor 2 rotates outside the coils 7, a rotating magnetic field which the permanent magnets 6 create cuts across the coils 7. Thus, an electromotive force occurs at the coils 7, and the generation of electricity is performed.

The rotor 2 is rotatably disposed outside the stator 3. The rotor 2 is equipped with a rotor yoke 11 and a rotor boss 12 that are formed of a magnetic material such as iron.

The rotor yoke 11 is a bottomed cylindrical member equipped with a bottom 11a and a cylindrical portion 11b.

The plurality of permanent magnets 6 are arranged on an inner circumferential surface of the cylindrical portion 11b in a circumferential direction.

The 16 permanent magnets 6 are disposed regularly at the pole arc angle θp of 22.5° such that polarities at the sides of inner surfaces thereof alternately become an N pole and an S pole. The number N (=2p where p is the integer) of the magnetic poles of the permanent magnets 6 is 16 (p = 8).

The rotor boss 12 is configured of a flange portion 12a having a disc shape and a boss portion 12b having an approximately cylindrical shape.

The flange portion 12a is mounted to be concentric with the rotor yoke 11 in the center of the bottom 11a of the rotor yoke 11.

The boss portion 12b is installed in the center of the flange portion 12a in a protruding state. The boss portion 12b extends along a center line of the flange portion 12a, and is taper-fitted to an end of the crankshaft 4. When the crankshaft 4 rotates, the rotor boss 12 also rotates along with the crankshaft 4, and the rotor 2 rotates outside of the coils 7.

The stator 3 is equipped with a stator core 13 formed by stacking a plurality of steel sheets. The plurality of salient poles 14 are formed at the stator core 13.

Each of the salient poles 14 is configured of a columnar magnetic path portion 15 around which one of the coils 7 is wound, and a protrusion 16 that protrudes from a leading end of the magnetic path portion 15 in a circumferential direction. A portion of each salient pole 14 which is opposite to the permanent magnet 6 is referred to as the distal end 17. The distal end 17 is configured of a distal end part 15t of the magnetic path portion 15 and the protrusion 16.

The coils 7 are wound around outer circumferences of the magnetic path portions 15 of the salient poles 14.

The generator 1 is a generator that generates three-phase alternating current. With respect to the salient poles 14, six salient poles are provided for each of U, V, and W phases. The number M of the salient poles of the stator 3 is 18. The generator 1 has a 16-pole/18-pole structure.

Next, an arrangement of the salient poles 14 of the generator 1 will be described in comparison with an arrangement of salient poles 94 of a conventional generator 91.

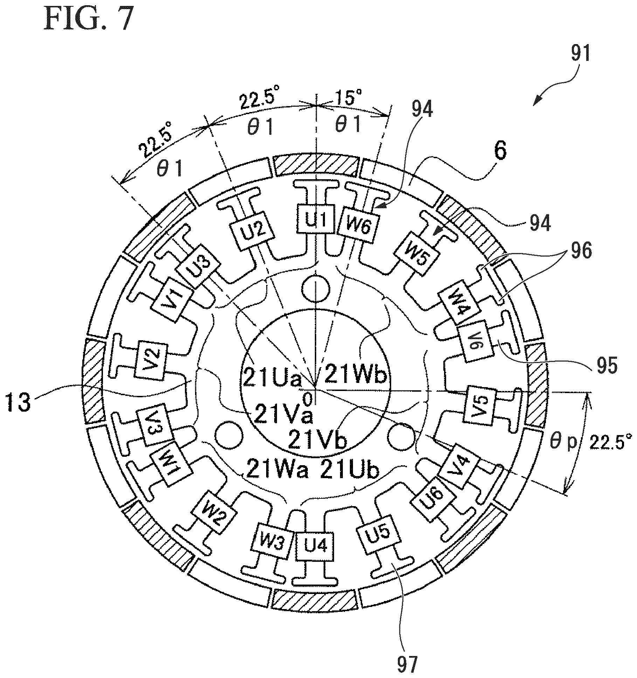

Fig. 7 is a view showing the conventional generator 91. The generator 91 is a generator described in Patent Literature 2. In the generator 91, the same members as in the generator 1 are given the same symbols.

In the following description, the six salient poles 14 forming the U phase may be referred to as U1 to U6. The six salient poles 14 forming the V phase may be referred to as V1 to V6. The six salient poles 14 forming the W phase may be referred to as W1 to W6.

As shown in Fig. 2, in the generator 1, the magnetic path portions 15 of the 18 salient poles 14 are disposed at the same angle. In the generator 1, an angle θ1 between the magnetic path portions 15 of the neighboring salient poles 14 is set to θ1 = 360°/M. For example, the angle θ1 between the magnetic path portion 15 of the salient pole 14 serving as U1 and the magnetic path portion 15 of the salient pole 14 serving as W6 is set to 20.0°. The angle θ1 is set independently of the pole arc angle θp.

As shown in Fig. 2, the generator 1 has salient poles 14a in which the protrusions 16 of each salient pole 14 are disposed at both sides of each magnetic path portion 15 in the circumferential direction, and salient poles 14b in which the protrusion 16 of each salient pole 14 is disposed at one side of each magnetic path portion 15 in the circumferential direction.

In the generator 1, the protrusions 16 are disposed at both sides of each of the salient poles 14a (e.g. U2, V2, W2, etc.) adjacent only to the in-phase salient poles 14 in the circumferential direction. For example, the salient pole 14a serving as U2 is adjacent only to the salient poles 14 serving as U1 and U2 that are in phase. The protrusions 16 are disposed at both sides of the salient pole 14a (or the magnetic path portion 15) serving as U2 in the circumferential direction. A protrusion amount (circumferential length) of each protrusion 16 can be arbitrarily set, but the protrusion amounts of the pair of protrusions 16 are the same.

In addition, in the generator 1, the salient poles 14b (e.g. U1, V1, W1, etc.) adjacent to the out-of-phase salient poles 14 have the protrusions 16, each of which is disposed only at a side (one side) adjacent to the out-of-phase salient pole 14 in either circumferential direction. For example, the salient pole 14b serving as U1 is adjacent to the salient pole 14 serving as W6 that is out of phase.

The salient pole 14b (or the magnetic path portion 15) serving as U1 has the protrusion 16 disposed only at a side adjacent to the salient pole 14 serving as W6 that is out of phase in either circumferential direction. A protrusion amount (circumferential length) of the single protrusion 16 is the same as that of each of the pair of protrusions 16 that are disposed at the salient pole 14a (or the magnetic path portion 15) serving as U2.

The salient poles 14 of the generator 1 are set to have the aforementioned shapes and arrangement in order to reduce the disadvantages of the conventional generator 91 while maintaining (keeping) the advantages of the conventional generator 91.

As shown in Fig. 7, in the generator 91, when in-phase salient poles 94 are adjacent to each other, an angle between magnetic path portions 95 is set to 22.5°. Protrusions 96 of each salient pole 94 are disposed at both sides in a circumferential direction.

For this reason, in the generator 91, the three salient poles 94 (or distal ends 97) forming the same phase are opposite to each other to be located on center lines of magnetic poles of the permanent magnets 6 at the same time. For example, the distal end 97 of the salient pole 94 serving as U1 is opposite to an N pole of the permanent magnet 6, the distal end 97 of the salient pole 94 serving as U2 is opposite to an S pole of the permanent magnet, and the distal end 97 of the salient pole 94 serving as U3 is opposite to an N pole of the permanent magnet 6, on the center lines of the respective magnetic poles at the same time. For this reason, the generator 91 has an advantage of being able to realize highly efficient power generation.

On the other hand, when out-of-phase salient poles 94 are adjacent to each other, an angle between magnetic path portions 95 is set to 15.0°. Protrusions 96 of each salient pole 94 are disposed at both sides in a circumferential direction.

For this reason, when the out-of-phase salient poles 94 are adjacent to each other, a space between the magnetic path portions 95 is reduced. Accordingly, in comparison with when the in-phase salient poles 94 are adjacent to each other, it is difficult for the coils 7 to be wound around the magnetic path portions 95.

In the generator 91, the magnetic path portions 95 around which the coils 7 are easily wound and the magnetic path portions 95 around which the coils 7 are not easily wound are mixed, and thus efficiency of winding work of the coils 7 may be reduced.

In contrast, in the generator 1, all the angles θ1 among the magnetic path portions 15 of the neighboring salient poles 14 are set to 20.0°. For this reason, the generator 1 is different from the generator 91 in that the portions at which the space between the magnetic path portions 15 is wide and the portions at which the space between the magnetic path portions 15 is narrow are not mixed at the stator 3. In the generator 1, the space between the magnetic path portions 15 is uniform.

For this reason, it is possible to efficiently wind the coils 7 around the magnetic path portions 15 and to prevent a drop in manufacturing efficiency. Also, the number of turns of the coil 7 wound around each magnetic path portion 15 can be increased, and thus an increase in power and efficiency of the generator 1 can be realized.

In addition, in the generator 1, the salient poles 14a adjacent only to the in-phase salient poles 14 have the protrusions 16, every two of which are disposed at both sides in the circumferential direction. Also, the salient poles 14b adjacent to the out-of-phase salient poles 14 have the protrusions 16, each of which is disposed only at a side adjacent to the out-of-phase salient pole 14 in either circumferential direction.

Thus, in the generator 1, the angle θ2 between the distal ends 17 of the neighboring salient poles 14 is set to 22.5°.

The angle θ2 between the distal ends 17 is an angle between center positions of the distal ends 17 in the circumferential direction.

Accordingly, in the generator 1, the distal end 17 of the salient pole 14 serving as U1 is opposite to an N pole of the permanent magnet 6, the distal end 17 of the salient pole 14 serving as U2 is opposite to an S pole of the permanent magnet 6, and the distal end 17 of the salient pole 14 serving as U3 is opposite to an N pole of the permanent magnet 6, on center lines of the respective magnetic poles at the same time. For this reason, similar to the generator 91, the generator 1 can realize highly efficient power generation.

As shown in Fig. 2, in the generator 1, the three salient poles 14 are disposed adjacent to one another in the circumferential direction, and form a pole set 21. For example, the salient pole 14 serving as U1, the salient pole 14 serving as U2, and the salient pole 14 serving as U3 are disposed adjacent to each other in the circumferential direction. A U-phase pole set 21Ua is formed by these three salient poles 14.

Also, the three in-phase salient poles 14 are disposed at the same electrical angle. In each pole set 21, the three salient poles 14 are opposite to the counter-polarity permanent magnets 6 and have the same electrical angle.

The distal ends 17 of the three salient poles 14 in the pole set 21 are set to approximately the same angle θ2 as the pole arc angle θp of the permanent magnet 6 such that the neighboring salient poles are opposite to each other with the magnetic poles having different polarities.

In the three salient poles 14 in the pole set 21, winding directions of the coils 7 wound around the neighboring salient poles 14 are set to directions opposite to each other. For example, the coil 7 wound around the salient pole 14 serving as U1 and the coil 7 wound around the salient pole 14 serving as U2 have the winding directions opposite to each other.

Likewise, the salient poles 14 of V1, V2, and V3 constituting the V phase are disposed adjacent to each other, and form a pole set 21Va. The salient poles 14 of W1, W2, and W3 constituting the W phase are disposed adjacent to each other, and form a pole set 21Wa.

In the pole sets 21Va and 21Wa, V1 to V3 and W1 to W3 are opposite to the counter-polarity permanent magnets 6 at the same electrical angle. The angles θ2 among the distal ends 17 of the salient poles 14 of V1 to V3 and W1 to W3 are set to 22.5°.

The coils 7 to which electric current is applied in a reverse direction are disposed around the in-phase salient poles 14 (V1 and V2, V2 and V3, W1 and W2, and W2 and W3) that are adjacent to each other.

The pole set 21 for each phase is provided in one set. The two pole sets 21 are disposed across a rotational center O of the rotor 2 to face each other. A pole set 21Ub is provided at a position at which the pole set 21Ub faces the pole set 21Ua across the rotational center O. Similarly, with respect to the pole sets 21Va and 21Wa, pole sets 21Vb and 21Wb are provided.

Three sets of salient poles 14 (U4, U5, and U6 for the U phase, V4, V5, and V6 for the V phase, and W4, W5, and W6 for the W phase) are also disposed at the pole sets 21Ub, 21Vb, and 21Wb.

In the generator 1, the six salient poles 14 for each phase are disposed regularly. For this reason, even in a magnetic configuration (the number of magnetic poles, N = 16) in which a voltage regulator of a thyristor type can be used, and power generation balance between the phases does not collapse, and a drop in efficiency of the power generation can be prevented.

In this way, the generator 1 according to the first embodiment of the present invention approximates the angle θ2 between the distal ends 17 of the in-phase salient poles 14 to the pole arc angle θp of the permanent magnet. Thus, the efficiency of the power generation can be inhibited from being reduced by the collapse of the power generation balance between the phases. Accordingly, an increase of the power and efficiency of the generator 1 can be realized.

On the other hand, since the angles θ1 between the magnetic path portions 15 of the neighboring salient poles 14 are uniformly set, it is possible to efficiently wind the coils 7 around the magnetic path portions 15 and to prevent the decrease of the manufacturing efficiency. Also, the number of turns of the coil 7 wound around each magnetic path portion 15 can be increased, and thus the increase of the power and efficiency of the generator 1 can be realized.

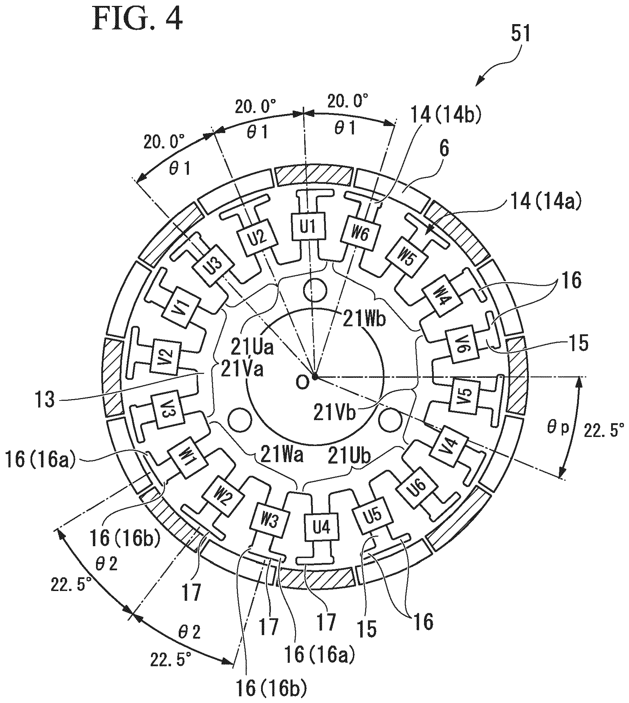

Fig. 4 is a sectional view showing a configuration of a generator 51 according to a second embodiment of the present invention.

In the generator 51, the same members as in the generator 1 according to the first embodiment are given the same symbols, and a description thereof will be omitted.

As shown in Fig. 4, in the generator 51, protrusions 16 of salient poles 14 are disposed at both sides of magnetic path portions 15 in a circumferential direction. The salient poles 14 are configured of salient poles 14a in which protrusion amounts of the pair of protrusions 16 are the same and salient poles 14b in which the protrusion amounts of the pair of protrusions 16 are different.

In the generator 51, the protrusions 16 are disposed at both sides of each of the salient poles 14a when the salient poles 14a (e.g. U2, V2, W2, etc.) are adjacent only to the in-phase salient poles 14 in the circumferential direction. For example, the salient pole 14a serving as U2 is adjacent only to the salient poles 14 serving as U1 and U3 that are in phase. The protrusions 16 are disposed at both sides of the salient pole 14a (or the magnetic path portion 15) serving as U2 in the circumferential direction. A protrusion amount (circumferential length) of each protrusion 16 may be arbitrarily set, but the protrusion amounts of the pair of protrusions 16 are the same. For example, the protrusion amount of the protrusion 16 is set to be α mm longer than that of the protrusion 16 in the generator 1 according to the first embodiment.

In addition, in the generator 51, the protrusions 16 are disposed at both sides of each of the salient poles 14b when the salient poles 14b (e.g. U1, V1, W1, etc.) are adjacent to the out-of-phase salient poles 14 in the circumferential direction. In this regard, the protrusion 16 (16a) disposed at a side (one side) adjacent to the out-of-phase salient pole 14 in either circumferential direction is long, and the protrusion 16 (16b) disposed at a side (one side) adjacent to the in-phase salient pole 14 in either circumferential direction is short.

For example, the salient pole 14b serving as U1 is adjacent to the salient pole 14b serving as W6 that is out of phase. The salient pole 14b (or the magnetic path portion 15) serving as U1 has the long protrusion 16 disposed at the side adjacent to the salient pole 14b serving as W6 that is out of phase in either circumferential direction. A protrusion amount (circumferential length) of the protrusion 16 is the same as that of each of the pair of protrusions 16 disposed at the salient pole 14a (or the magnetic path portion 15) serving as U2.

The salient pole 14b (or the magnetic path portion 15) serving as U1 has the short protrusion 16 (16b) disposed at the side adjacent to the salient pole 14 serving as U2 that is in phase in either circumferential direction. A protrusion amount (circumferential length) of the protrusion 16b is different from that of each of the pair of protrusions 16 disposed at the salient pole 14a (or the magnetic path portion 15) serving as U2. The protrusion amount of the protrusion 16 (16b) is, for example, set to α mm.

In this way, in the generator 51, the pair of protrusions 16 at the salient pole 14b adjacent to the out-of-phase salient pole 14 are set in such a manner that the protrusion 16 (16a) disposed at the side (one side) adjacent to the out-of-phase salient pole 14 is long, and such that the protrusion 16 (16b) disposed at the side (one side) adjacent to the in-phase salient pole 14 is short. The protrusion amount of the protrusion 16a is set to be α mm longer than that of the protrusion 16 of the generator 1, and the protrusion 16b is projected by the same amount (α mm) as the protrusion 16a. Accordingly, center positions of the distal ends 17 of the salient poles 14b are the same as in the generator 1. That is, in the generator 51, an angle θ2 between the distal ends 17 of the neighboring salient poles 14 is set to 22.5°.

Thus, in the generator 51 according to the second embodiment of the present invention, the same effects as the generator 1 according to the first embodiment are obtained. That is, the angle θ2 between the distal ends 17 of the in-phase salient poles 14 approximates a pole arc angle θp of the permanent magnet, and thus efficiency of the power generation can be inhibited from being reduced by collapse of the power generation balance between the phases. Accordingly, an increase in power and efficiency of the generator 51 can be realized.

On the other hand, since the angle θ1 between the magnetic path portions 15 of the neighboring salient poles 14 is uniformly set, it is possible to efficiently wind the coils 7 around the magnetic path portions 15 and to prevent a drop in manufacturing efficiency. Also, the number of turns of the coil 7 wound around each magnetic path portion 15 can be increased, and thus the increase of the power and efficiency of the generator 51 can be realized.

The present invention is not limited to the above embodiments, but can be modified in various ways without departing from the gist of the present invention.

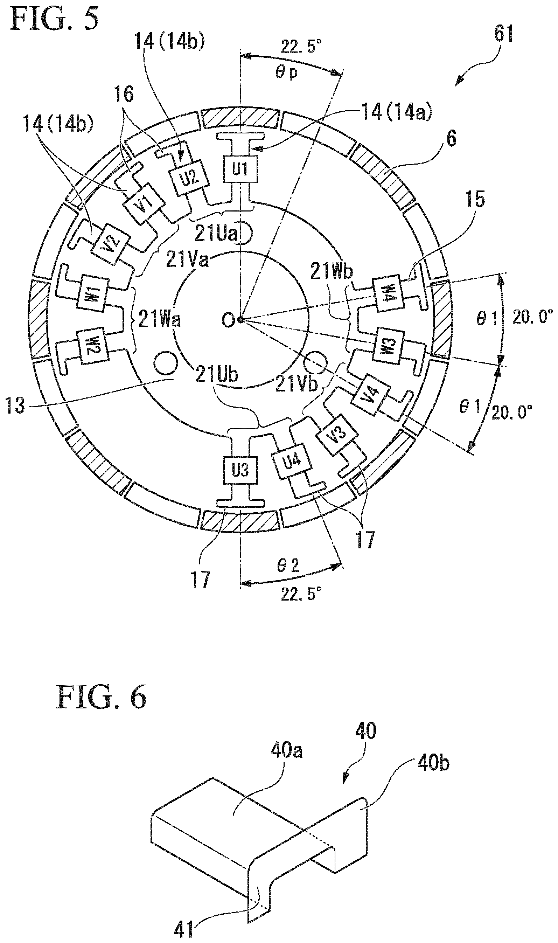

For example, in the aforementioned embodiments, the generator having the 16-pole/18-pole structure is shown. However, as shown in Fig. 5, a generator 61 having a 16-pole/12-pole structure is also possible.

In the aforementioned embodiments, the case in which the generator according to the present invention is used as an electric dynamo is shown. However, the generator may also be used as a motor.

For example, bobbins 40 corresponding to the salient poles 14 may be provided (see Fig. 6). Two bobbins 40 having symmetrical shapes are mounted for one salient pole 14. Each of the bobbins 40 is formed of a winding body protection part 40a covering an outer circumferential surface of the magnetic path portion 15, and a tooth protection part 40b covering the distal end 17 (or the protrusion 16). The winding body protection part 40a is formed in an approximately U-shaped cross section. The tooth protection part 40b is formed at a tip edge of the winding body protection part 40a to be perpendicular to the winding body protection part 40a by overhanging in a flange shape.

As shown in Fig. 6, the bobbin 40 disposed for the salient pole 14b adjacent to the out-of-phase salient pole 14 has a irregular coil winding prevention part 41 formed at a side (side facing the in-phase salient pole 14) at which no protrusion 16 is present. The irregular coil winding prevention part 41 is formed to be perpendicular to the winding body protection part 40a by overhanging in a flange shape. The irregular coil winding prevention part 41 is integrally formed with the tooth protection part 40b. The irregular coil winding prevention part 41 is formed to have a smaller protrusion amount than the tooth protection part 40b.

The irregular coil winding prevention part 41 is provided for the bobbin 40. Thereby, the coil 7 can be prevented from being irregularly wound at the side at which no protrusion 16 is present.

The irregular coil winding prevention part 41 is not limited to being formed by overhanging in the flange shape with respect to the winding body protection part 40a. A plurality of grooves corresponding to copper wires of the coil 7 may be formed in a surface of the winding body protection part 40a.

The aforementioned generator may also be applied to a combination generator and motor like the ACG starter of the motorcycle. In the aforementioned embodiments, the example in which the generator according to the present invention is applied to the generator for the motorcycle has been shown. The generator may also be applied to generators or motors for other uses.

In the aforementioned embodiments, the example in which the present invention is applied to the outer rotor type generator has been shown. However, the present invention may also be applied to a so-called inner rotor type generator in which a rotor is arranged inside a stator.

In the aforementioned embodiments, the generator whose phases are three has been described. However, the present invention may also be applied to other multiphase generators such as a five-phase generator.

In the present embodiments, the case in which the angle θ2 between the in-phase distal ends 17 is identical to the pole arc angle θp of the permanent magnet 6 has been shown, but the present invention is not limited thereto. The angle θ2 between the in-phase distal ends 17 need only approximately match the pole arc angle θp of the permanent magnet 6. Also, the angle θ2 between the in-phase distal ends 17 may slightly differ from the pole arc angle θp of the permanent magnet 6. In addition, the angle θ2 between the in-phase distal ends 17 may approximately match the pole arc angle θp of the permanent magnet 6, and a shape of the distal end 17 of each salient pole 14 is not limited to the present embodiments.

In the present embodiments, the case in which the magnetic path portions 15 of the salient poles 14 are provided equiangularly has been shown, but the present invention is not limited thereto. That is, an area of each slot need only be approximately uniform. As in the present embodiments, when the pole arc angles θp of the permanent magnets 6 are each 20°, they need not be precisely equiangular but should be within 22.5° ± 2.5° (within 12.5% of the pole arc angle θp of each permanent magnet 6).

In the present embodiments, cases in which the space formed between the magnetic path portions 15 is uniform have been shown, but the present invention is not limited thereto. That is, as long as each space is approximately uniform, an amount of the coils in each space is approximately the same, and thus the same effect can be produced.

### [Industrial Applicability]

According to the aforementioned magnet generator, since the arrangement angle for the protrusions of the salient poles approximates the pole arc angle for the permanent magnets, the efficiency of the power generation can be inhibited from being reduced by the collapse of the power generation balance between the phases. Accordingly, an increase in power and efficiency of the generator can be realized.

On the other hand, since the angle between the neighboring magnetic path portions of the salient poles is uniformly set, it is possible to efficiently wind the coils around the magnetic path portions and to prevent a drop in manufacturing efficiency.

### [Reference Signs List]

1, 51, 61: generator (magnet generator)
2: rotor
3: stator
6: permanent magnet
7: coil
14: salient pole
15: magnetic path portion
15t: distal end part
16: protrusion
17: distal end
40: bobbin
41: irregular coil winding prevention part
θp: pole arc angle
θ1: arrangement angle for magnetic path portions
θ2: arrangement angle for distal ends

## Claims

1. A magnet generator (1, 51, 61) comprising:
a stator (3) having a plurality of salient poles (14), each of which is configured of a magnetic path portion (15) around which a coil (7) is wound and a protrusion (16) protruding laterally from a tip of the magnetic path portion (15); and
a rotor (2) arranged rotatably on an inner or outer circumference of the stator (3) and having a plurality of permanent magnets (6) attached in a circumferential direction to be opposite to the salient poles (14),
**characterized in that**:
the salient poles (14) are configured such that every magnetic path portions (15) has the same arrangement angle between the adjacent magnetic path portions (15);
the salient poles have distal ends (17) having surfaces that are arranged to be opposite to the permanent magnets, each surface of the distal ends (17) includes an area (15t) of the magnetic path portion (15) and an area of the protrusion (16); an arrangement angle between center positions of the surfaces of the distal ends (17) in the circumferential direction that are in phase, is set to be the same as a pole arc angle of each of the permanent magnets (6);
the salient poles (14) adjacent only to the salient poles (14) that are in phase have the protrusions (16) disposed at both sides in the circumferential direction; and
the salient poles (14) adjacent to the salient poles (14) that are out of phase have the protrusions (16) disposed only at a side adjacent to each of the out-of-phase salient poles (14) in either circumferential direction.

2. The magnet generator (1, 51, 61) according to claim 1, wherein protrusion amounts of the protrusions (16) are set to be approximately uniform.

3. The magnet generator (1, 51, 61) according to claim 1, wherein:
the salient poles (14) have the protrusions (16) disposed at both sides in the circumferential direction; and
the salient poles (14) adjacent to the salient poles (14) that are out of phase are configured such that a protrusion amount of each of the protrusions (16) disposed at a first side in the circumferential direction is different from that of each of the protrusions (16) disposed at a second side in the circumferential direction.

4. The magnet generator (1, 51, 61) according to claim 1 or 2, further comprising bobbins (40) disposed to correspond to the salient poles (14) adjacent to the out-of-phase salient poles (14),
wherein each of the bobbins (40) has an irregular coil winding prevention part (41), which prevents irregular winding of the coil (7), at a side opposite to each of the in-phase salient poles (14).

5. The magnet generator (1, 51, 61) according to any one of claims 1 to 4, wherein in-phase salient poles (14) disposed adjacent to each other in the circumferential direction are disposed at the same electrical angle.

## Patentansprüche

1. Magnetgenerator (1, 51, 61), umfassend:
einen Stator (3), der mit mehreren vorspringenden Polen (14) versehen ist, von denen jeder aus einem Magnetpfadabschnitt (15), um den eine Spule (7) gewickelt ist, und aus einem Vorsprung (16), der von einer Spitze des Magnetpfadabschnitts (15) vorsteht, konfiguriert ist; und
einen Rotor (2), der drehbar auf einem Innen- oder Außenumfang des Stators (3) angeordnet ist, mit einer Vielzahl von Permanentmagneten (6), die in einer Umfangsrichtung befestigt sind, so dass sie sich gegenüber den vorspringenden Polen (14) befinden,
**dadurch gekennzeichnet, dass**
die vorspringenden Pole (14) so konfiguriert sind, dass jeder Magnetpfadabschnitt (15) denselben Anordnungswinkel zwischen benachbarten Magnetpfadabschnitten (15) aufweist;
die vorspringenden Polen (14) distale Endabschnitte (17) haben, deren Flächen so angeordnet sind, dass sie sich gegenüber den Permanentmagneten befinden, wobei jede Fläche der distalen Endabschnitte (17) einen Bereich (15t) des Magnetpfadabschnitts (15) und einen Bereich des Vorsprungs (16) umfasst;
ein Anordnungswinkel zwischen Mittelpositionen der Flächen der distalen Endabschnitte (17) in Umfangsrichtung, die phasengleich sind, so eingestellt wird, dass er einem polaren Bogenwinkel jedes der Permanentmagneten (6) entspricht.
bei den vorspringenden Polen (14), die nur zu den phasengleichen vorspringenden Polen (14) benachbart sind, die Vorsprünge (16) beiderseits in Umfangsrichtung angeordnet sind; und
bei den vorspringenden Polen (14), die zu den phasenversetzten vorspringenden Polen (14) benachbart sind, die Vorsprünge (16) nur auf der Seite neben den phasenversetzten vorspringenden Polen (14) in jeder Umfangsrichtung angeordnet sind.

2. Magnetgenerator (1, 51, 61) nach Anspruch 1, wobei die Menge der Vorsprünge der Vorsprünge (16) so gewählt wird, dass sie ungefähr gleich ist.

3. Magnetgenerator (1, 51, 61) nach Anspruch 1, wobei:
die Vorsprünge (16) der vorspringenden Polen (14), beiderseits in Umfangsrichtung angerordnet sind und
die vorspringenden Polen (14), die zu den phasenversetzten vorspringenden Polen (14)benachbart sind, so konfiguriert sind, dass sich die Vorsprungsmenge jedes der Vorsprünge (16), die auf einer ersten Seite in Umfangsrichtung angeordnet sind, sich von der jedes der Vorsprünge (16) unterscheidet, die auf einer zweiten Seite in Umfangsrichtung angeordnet sind.

4. Magnetgenerator (1, 51, 61) nach Anspruch 1 oder 2, der weiterhin Spulen (40) umfasst, die so angeordnet sind, dass sie den vorspringenden Polen (14) entsprechen, die zu den phasenversetzten vorspringenden Polen (14) benachbart sind,
wobei jede der Spulen (40) einen Teil zur Vermeidung unregelmäßiger Spulenwicklung (41) aufweist, der die unregelmäßige Wicklung (7) der Spule auf der Seite gegenüber jedem der phasengleichen vorspringenden Pole (14) vermeidet.

5. Magnetgenerator (1, 51, 61) nach einem der Ansprüche 1 bis 4, wobei die phasengleichen vorspringenden Pole (14), die einander benachbart in der Umfangsrichtung angeordnet sind, im selben elektrischen Winkel angeordnet sind.

## Revendications

1. Générateur à aimants (1, 51, 61) comprenant :
un stator (3) ayant une pluralité de pôles saillants (14), dont chacun est configuré d'une portion de chemin magnétique (15) autour de laquelle une bobine électrique (7) est enroulée et d'une saillie (16) faisant saillie latéralement à partir d'une pointe de la portion de chemin magnétique (15) ; et
un rotor (2) agencé de façon à pouvoir tourner sur une circonférence interne ou externe du stator (3) et ayant une pluralité d'aimants permanents (6) attachés dans une direction circonférentielle devant être à l'opposé des pôles saillants (14),
**caractérisé en ce que** :
les pôles saillants (14) sont configurés de telle manière que chaque portion de chemin magnétique (15) a le même angle d'agencement entre les portions de chemin magnétique (15) adjacentes ;
les pôles saillants ont des extrémités distales (17) ayant des surfaces qui sont agencées de façon à être à l'opposé des aimants permanents, chaque surface des extrémités distales (17) inclut une région (15t) de la portion de chemin magnétique (15) et une région de la saillie (16) ;
un angle d'agencement entre les positions centrales des surfaces des extrémités distales (17) dans la direction circonférentielle qui sont en phase, est défini comme étant le même qu'un angle d'arc polaire de chacun des aimants permanents (6) ;
les pôles saillants (14) adjacents uniquement aux pôles saillants (14) qui sont en phase ont les saillies (16) disposées au niveau des deux côtés dans la direction circonférentielle ; et
les pôles saillants (14) adjacents aux pôles saillants (14) qui sont déphasés ont les saillies (16) disposées uniquement au niveau d'un côté adjacent à chacun des pôles saillants (14) déphasés dans l'une ou l'autre direction circonférentielle.

2. Générateur à aimants (1, 51, 61) selon la revendication 1, dans lequel les quantités de saillie des saillies (16) sont définies comme étant approximativement uniformes.

3. Générateur à aimants (1, 51, 61) selon la revendication 1, dans lequel :
les pôles saillants (14) ont les saillies (16) disposées au niveau des deux côtés dans la direction circonférentielle ; et
les pôles saillants (14) adjacents aux pôles saillants (14) qui sont déphasés sont configurés de telle manière qu'une quantité de saillie de chacune des saillies (16) disposées au niveau d'un premier côté dans la direction circonférentielle est différente de celle de chacune des saillies (16) disposées au niveau d'un second côté dans la direction circonférentielle.

4. Générateur à aimants (1, 51, 61) selon la revendication 1 ou 2, comprenant en outre des bobines (40) disposées pour correspondre aux pôles saillants (14) adjacents aux pôles saillants (14) déphasés,
dans lequel chacune des bobines (40) a une partie de prévention d'enroulement irrégulier de bobine électrique (41), qui prévient l'enroulement irrégulier de la bobine électrique (7), au niveau d'un côté opposé à chacun des pôles saillants (14) en phase.

5. Générateur à aimants (1, 51, 61) selon l'une quelconque des revendications 1 à 4, dans lequel les pôles saillants (14) en phase disposés adjacents les uns aux autres dans la direction circonférentielle sont disposés au même angle électrique.
